# NEUE EUROPÄISCHE PATENTSCHRIFT

(11) **EP 1 156 241 B2**
(45) Veröffentlichungstag und Bekanntmachung des Hinweises auf die Entscheidung über den Einspruch: **08.10.2014**
(45) Hinweis auf die Patenterteilung: 09.11.2005
(21) Anmeldenummer: 01102465.0
(22) Anmeldetag: 03.02.2001
(51) Int. Cl.: F16J 15/32

(54) **Dichtmanschette, insbesondere für Einbauräume mit kleinen Abmessungen**
Annular sleeve seal, especially for mounting in housings with reduced dimensions
Manchette d'étanchéité, en particulier pour logement à faibles dimensions

(30) Priorität: 16.05.2000 DE 10024026
(43) Veröffentlichungstag der Anmeldung: 21.11.2001
(73) Patentinhaber: Carl Freudenberg KG, 69469 Weinheim (DE)
(72) Erfinder: Pataille, Gilbert, 52200 Corlee (FR); Tchilingurian, Boris, 52200 Langres (FR)

(56) Entgegenhaltungen:
- EP-A1- 0 798 498
- WO-A-96/02777
- DE-A- 3 511 333
- DE-A- 3 607 662
- DE-A- 19 532 701
- DE-A1- 3 640 346
- DE-A1- 4 307 964
- US-A- 4 531 748
- US-A- 5 556 112
- Radialwellendichtung 829 SRDW 50-72-8 PTAE MAN
- Radialwellendichtung 829 SSPLDWM 90-110-12 PTAE

## Beschreibung

### Technisches Gebiet

Für die Abdichtung von Wellendurchführungen werden Dichtungsanordnungen eingesetzt, die das Schmiermittel im Inneren des Gehäuses zurückhalten sollen und die verhindern, dass Staub, Schmutz und dergleichen von außen in das Gehäuseinnere eintritt. Es werden sehr unterschiedliche Konstruktionen von Dichtungen verwendet. Von beachtlicher Bedeutung ist dabei, unter anderem, die Größe des Einbauraumes. Je kleiner der Einbauraum, umso schwieriger ist seine Abdichtung. Angestrebt wird in jedem Fall eine lange Gebrauchsdauer der Dichtung bei geringstem Verschleiß. Letzteres wird auch durch den Einsatz von geeigneten Werkstoffen wie beispielsweise von PTFE-Compounds erreicht.

### Stand der Technik

Bekannt ist aus der DE OS 33 16 063 einDichtring, der mit einer Dichtmanschette aus PTFE versehen ist. Die Dichtmanschette ist trompetenartig entgegen des abzudichtenden Raumes verformt und weist hydrodynamisch wirkende Rückförderelemente auf der der abzudichtenden Welle zugewandten Seite auf. Eine weitere Dichtmanschette ist aus der DE-A-19 532 701 bekannt.

### Darstellung der Erfindung

Der Erfindung liegt die Aufgabe zugrunde, den bekannten Dichtring weiter zu entwickeln, indem unter Beibehaltung einer möglichst einfachen Herstellung, eine sichere Abdichtung auch bei extremen Betriebsbedingungen erreicht wird. Die Dichtungsanordnung soll ein geringes Gewicht haben und eine lange Gebrauchsdauer bei geringem Verschleiß. Eventuelle Rundlaufabweichungen, ein Mittenversatz von Welle und Bohrung, Unrundheiten an der Welle und dergleichen, sollen ausgeglichen werden. Dieses auch bei hohen Umfangsgeschwindigkeiten, hohen Temperaturen und eventuell auftretenden Mangelschmierungen an der Dichtstelle.

Die Lösung der gestellten Aufgabe erfolgt mit den Merkmalen des Anspruchs 1. Die Unteransprüche 2 bis 9 enthalten vorteilhafte Ausgestaltungen des Erfindungsgedankens.

Ausgehend vom Stand der Technik ist die Dichtungsanordnung mit einer Dichtmanschette aus polymerem Werkstoff versehen, die einen Halteabschnitt und einen Dichtabschnitt aufweist. Der Halteabschnitt ist mit einem Stützkörper verbunden und der Dichtabschnitt umschließt eine abzudichtende Welle unter radialer Vorspannung umfangsseitig. Der Dichtabschnitt ist auf seiner der Welle zugewandten Seite mit einer Oberflächenprofilierung zur Rückförderung von Schmieröl versehen. Die erfindungsgemäße Ausgestaltung sieht vor, dass der Anbindungsdurchmesser (Innendurchmesser der Einfassung) das 1,0 bis 1,05-fache des Wellendurchmessers zuzüglich der 4-fachen Manschettendicke beträgt. Die konstruktive Ausgestaltung der Dichtmanschette erfolgt somit ausgehend von dem Wellendurchmesser. Dieser wird in Bezug zum Anbindungsdurchmesser der Einfassung gesetzt und die nächsten konstruktiven Schritte der Dichtringgestaltung durchgeführt. Als Einfassung wird der Teil der Dichtungsanordnung bezeichnet, an dem die Dichtmanschette befestigt ist.

Die Manschettendicke wird so gewählt, dass sie 1/20 - 1/300, vorzugsweise 1/50 - 1/200 des Wellendurchmessers beträgt. Die Manschette erhält dadurch eine besonders flache Gestalt. Außerdem wird die Länge des Dichtabschnittes der Manschette besonders lang gewählt, so dass sie das 3- bis 15-fache, vorzugsweise das 4- bis 12-fache der Manschettendicke beträgt. Die Anpresskraft des Dichtabschnitts auf die Welle wird dadurch verringert und es entsteht ein geringerer Reibungsverlust. Außerdem wird Material eingespart durch die besonders dünne Ausbildung der Manschette.

Außerdem ist es vorteilhaft, wenn die Manschette im Dichtabschnitt auf ihrer Rückseite glatt und auf ihrer Dichtseite spiralförmig geriffelt ausgebildet ist. Diese Riffelung lässt eine gute Rückführung des Schmiermittels zu. Diese Riffelung kann in an sich bekannter Weise im Schnitt aus symmetrischen Dreiecken oder aus asymmetrischen Sägezähnen ausgebildet sein. Dabei sind die flacheren Flächen der Sägezähne zum abzudichtenden Raum hin ausgebildet. Die Tiefe der Riffelung wird besonders hoch gewählt und beträgt 70-90 % der Manschettendicke. Ein bevorzugter Bereich hat sich bei 85 % erwiesen. Die Riffelung selbst wird bis an den Halteabschnitt der Dichtmanschette herangeführt. Hierdurch wird eine gute Rückführung des Schmiermittels gewährleistet. Um während des Stillstands der Welle einen Austritt von Schmiermittel nach außen zu verhindern, ist der umgebungsseitige Rand der Dichtmanschette als Dichtwulst ausgebildet. Eine punktförmige Unterbrechung an einer der vorderen Riffelungen ist hier ebenfalls möglich.

Der Innendurchmesser der Manschette wird so ausgeführt, dass der Dichtabschnitt mit mindestens 4 Riffelungen an der Welle anliegt. Günstig sind 4 bis 12 Riffelungen, der bevorzugte Bereich liegt jedoch bei 7 bis-8 Riffelungen. Die Anbringung von mehrgängigen Riffelungen kann bei bestimmten Anwendungsfällen vorteilhaft sein.

### Ausführung der Erfindung

Anhand eines Ausführungsbeispiels wird die Erfindung näher erläutert.

Es zeigt:

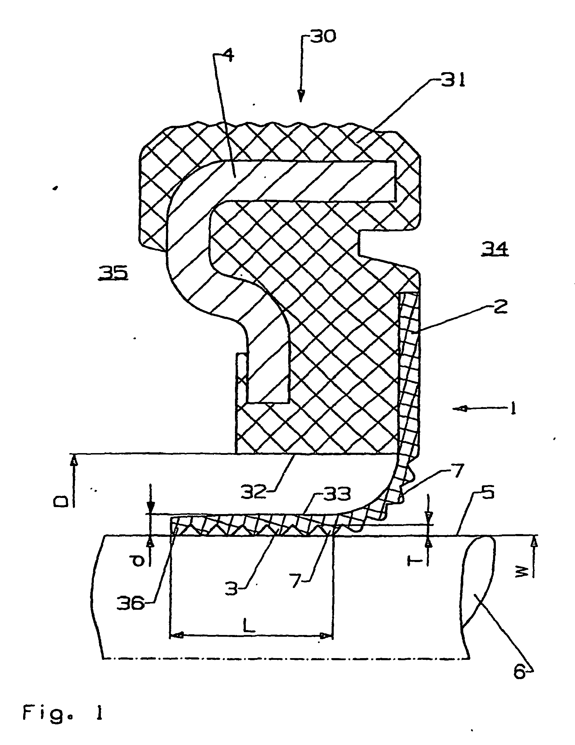

- Fig. 1: einen Längsschnitt durch die Dichtungsanordnung für eine Welle und

In der Fig. 1 ist im Längsschnitt der obere Teil der Dichtungsanordnung 30 dargestellt. Die Dichtungsanordnung 30 besteht im wesentlichen aus dem Stützkörper 4, der Einfassung 31 aus einem polymeren Werkstoff und der Dichtmanschette 1 aus einem PTFE-Compound. Über die Einfassung 31 wird die Dichtungsanordnung 30 in ein nicht näher gezeigtes Gehäuse eingesetzt. Außerdem wird an der Einfassung 31 die Dichtmanschette 1 befestigt. Die Dichtmanschette 1 besteht aus dem Halteabschnitt 2 und dem Dichtabschnitt 3. Der Halteabschnitt 2 ist über die Einfassung 31 mit dem Stützkörper 4 verbunden. Der Stützkörper 4 ist aus einem geeigneten Werkstoff, der jedoch eine größere Härte als der Werkstoff der Einfassung 31 hat. Es können Bleche und Kunststoffe verwendet werden. Der Dichtabschnitt 3 liegt an der Oberfläche 5 der Welle 6 an. Der Dichtabschnitt 3 ist lediglich auf seiner zur Welle 6 gerichteten Seite mit der Oberflächenprofilierung 7 versehen. Die Einfassung 31 ist auf ihrer innenliegenden Seite durch die zylindrische Fläche 32 begrenzt. Der Durchmesser D dieses Innenraums wird als Anbindungsdurchmesser bezeichnet. Er gibt die innere Begrenzung des Halteabschnitts 2 der Dichtmanschette 1 wieder. Der Wellendurchmesser ist mit W angegeben. Die Manschettendicke d wird möglichst gering gewählt. Sie beträgt ein 1/130 des Wellendurchmessers W. In Versuchen konnte ermittelt werden, dass eine gute Abdichtung dann erreicht wird, wenn der Anbindungsdurchmesser D für die Manschette 1 das 1,05-fache des Wellendurchmessers W zuzüglich der vierfachen Manschettendicke d beträgt. Die Länge des Dichtabschnitts 3 der Manschette 1 beträgt im Ausführungsbeispiel etwa das 7-fache der Manschettendicke d. Dabei wird hier nur die Länge L des Teils des Dichtabschnitts 3 gemessen, die direkt an der Welle 6 anliegt. Die Manschette 1 ist im Dichtabschnitt 3 auf ihrer Rückseite 33 glatt, während die Dichtseite spiralförmig geriffelt ist. Die Riffelung 7 ist aus im wesentlichen symmetrischen Dreiecken gebildet. Der abzudichtende Raum 34 befindet sich auf der rechten Seite der Fig. 1, so dass eine mediumseitige Anbindung der Manschette 1 an die Dichtungsanordnung 30 gegeben ist. Auch hierdurch wird eine kleinere Bauhöhe der Dichtungsanordnung 30 ermöglicht. Des weiteren wird die Montage der Dichtungsanordnung 30 auf der Welle 6 erleichtert. Die Tiefe T der Riffelung beträgt 85 % der Manschettendicke d. Der zur Umgebung 35 hinweisende Rand 36 der Dichtmanschette 1 ist als Dichtwulst ausgebildet. Der an der Welle 6 anliegende Dichtabschnitt 3 ist mit sieben Riffelungen 7 versehen.

## Patentansprüche

1. Dichtung mit einem von einer aus einem polymeren Werkstoff bestehenden Einfassung (31) gehaltenen Stützkörper (4) und einer Dichtmanschette (1) aus einem PTFE-Compound insbesondere für Einbauräume mit kleinen Abmessungen, wobei die Dichtmanschette (1) einen Halteabschnitt (2) und einen Dichtabschnitt (3) aufweist, der Halteabschnitt (2) über die Einfassung (31) mit dem Stützkörper (4) verbunden ist und der Dichtabschnitt (3) eine abzudichtende Welle (6) unter radialer Vorspannung umfangsseitig dichtend umschließt und auf der der Welle (6) zugewandten Seite eine Oberflächenprofilierung (7) zur Rückförderung von Schmiermittel aufweist, **dadurch gekennzeichnet, dass** die Einfassung (31) auf ihrer innen liegenden Seite durch eine zylindrische Fläche (32) begrenzt ist und der Innendurchmesser D der Einfassung (31) das 1,0 bis 1,05 -fache des Wellendurchmessers W zuzüglich der 4-fachen Manschettendicke d beträgt, wobei die Tiefe (T) der Riffelung (7) des Oberflächenprofilierung 70 bis 90% der Manschettendicke (d) beträgt und der zur Umgebung (35) hinweisende Rand (36) der Dichtmanschette (1) als Dichtwurst ausgebildet ist.

2. Dichtung mit Dichtmanschette nach Anspruch 1, **dadurch gekennzeichnet, dass** die Manschettendicke d 1/20 bis 1/300, vorzugsweise 1/50 bis 1/200, des Wellendurchmessers (W) beträgt.

3. Dichtung mit Dichtmanschette nach Anspruch 1 oder 2, **dadurch gekennzeichnet, dass** die Länge (L) des Dichtabschnitts (3) der Manschette (1) der an der Welle (6) anliegt das 3- bis 15-fache, vorzugsweise das 4- bis 12-fache, der Manschettendicke (d) beträgt.

4. Dichtung mit Dichtmanschette nach Anspruch 1 bis 3, **dadurch gekennzeichnet, dass** die Manschette (1) im Dichtabschnitt (3) auf ihrer Rückseite (33) glatt und auf ihrer Dichtseite spiralförmig geriffelt ausgebildet ist.

5. Dichtung mit Dichtmanschette nach Anspruch 1 bis 4, **dadurch gekennzeichnet, dass** die Riffelung (7) im Schnitt aus im wesentlichen symmetrischen Dreiecken oder asymmetrischen Sägezähnen ausgebildet ist.

6. Dichtung mit Dichtmanschette nach Anspruch 1 bis 5, **dadurch gekennzeichnet, dass** die flacheren Flächen der Sägezähne zum abzudichtenden Raum (34) weisen.

7. Dichtung mit Dichtmanschette nach Anspruch 1 bis 6, **dadurch gekennzeichnet, dass** die Riffelung (7) bis zu dem Halteabschnitt (2) der Dichtmanschette(1) herangeführt ist.

8. Dichtung mit Dichtmanschette nach Anspruch 1 bis 7, **dadurch gekennzeichnet, dass** der an der Welle anliegende Dichtabschnitt (3) 4 bis 12, vorzugsweise 7 bis 8 Riffelungen (7) aufweist.

9. Dichtung mit Dichtmanschette nach Anspruch 1 bis 8, **dadurch gekennzeichnet, dass** die Riffelungen (7) mehrgängig sind.

## Claims

1. Seal with a supporting body (4) which is held by a surround (31) consisting of a polymeric material and a sealing collar (1) of a PTFE compound, especially for mounting spaces with small dimensions, the sealing collar (1) having a retaining portion (2) and a sealing portion (3), the retaining portion (2) being connected to the supporting body (4) by way of the surround (31) and the sealing portion (3) enclosing a shaft (6) to be sealed in a sealing manner with a radial prestress at its circumference and having on the side facing the shaft (6) a surface profiling (7) for the return of lubricant, **characterized in that** the surround (31) is bounded on its inner side by a cylindrical surface (32) and the inside diameter (D) of the surround (31) is 1.0 to 1.05 times the shaft diameter (W) plus 4 times the collar thickness (d), the depth (T) of the grooving (7) of the surface profiling being 70-90% of the collar thickness (d) and the edge (36), facing the ambient environment (35), of the sealing collar (1) is formed as a sealing bead.

2. Seal with sealing collar according to Claim 1, **characterized in that** the collar thickness d is 1/20 to 1/300, preferably 1/50 to 1/200, of the shaft diameter (W).

3. Seal with sealing collar according to Claim 1 or 2, **characterized in that** the length (L) of the sealing portion (3) of the collar (1) which is in contact with the shaft (6) is 3 to 15 times, preferably 4 to 12 times, the collar thickness (d).

4. Seal with sealing collar according to Claims 1 to 3, **characterized in that** the collar (1) is formed in the sealing portion (3) such that it is smooth on its rear side (33) and spirally grooved on its sealing side.

5. Seal with sealing collar according to Claims 1 to 4, **characterized in that** the grooving (7) is formed in section by substantially symmetrical triangles or asymmetrical sawteeth.

6. Seal with sealing collar according to Claims 1 to 5, **characterized in that** the flatter faces of the sawteeth face towards the space (34) that is to be sealed.

7. Seal with sealing collar according to Claims 1 to 6, **characterized in that** the grooving (7) is made to extend up to the retaining portion (2) of the sealing collar (1).

8. Seal with sealing collar according to Claims 1 to 7, **characterized in that** the sealing portion (3) in contact with the shaft has 4 to 12, preferably 7 to 8, groovings (7).

9. Seal with sealing collar according to Claims 1 to 8, **characterized in that** the groovings (7) are multi-threaded.

## Revendications

1. Garniture d'étanchéité comportant un corps de support (4) maintenu par une monture (31) constituée en matériau polymère et une manchette d'étanchéité (1) en un composé PTFE, en particulier pour des logements de faibles dimensions, la manchette d'étanchéité (1) présentant une section de retenue (2) et une section d'étanchement (3), la section de retenue (2) étant reliée au corps de support (4) par la monture (31) et la section d'étanchement (3) entourant circonférentiellement de façon étanche sans précontrainte radiale un arbre (6) à étancher et présentant du côté tourné vers l'arbre (6) un profilage de surface (7) destiné à refouler du lubrifiant, **caractérisée en ce que** la monture (31) est délimitée par une surface cylindrique (32) sur sa surface intérieure et le diamètre intérieur (D) de la monture (31) est de 1,0 à 1,05 fois le diamètre (W) de l'arbre plus quatre fois l'épaisseur (d) de la manchette, la profondeur (T) du cannelage (7) du profilage de surface étant de 70 à 90% de l'épaisseur (d) de la manchette et le bord (36) tourné vers l'environnement (35) de la manchette d'étanchéité (1) étant conformé en tant que bourrelet d'étanchement.

2. Garniture d'étanchéité comportant une manchette d'étanchéité selon la revendication 1, **caractérisée en ce que** l'épaisseur (d) de la manchette est de 1/20 à 1/300, de préférence 1/50 à 1/200, du diamètre (W) de l'arbre.

3. Garniture d'étanchéité comportant une manchette d'étanchéité selon la revendication 1 ou 2, **caractérisée en ce que** la longueur (L) de la section d'étanchement (3) de la manchette (1) reposant sur l'arbre (6) est de 3 à 15 fois, de préférence 4 à 12 fois, l'épaisseur (d) de la manchette.

4. Garniture d'étanchéité comportant une manchette d'étanchéité selon les revendications 1 à 3, **caractérisée en ce que** le côté arrière (33) de la section d'étanchement (3) de la manchette (1) est lisse et **en ce que** son côté d'étanchement est cannelé de façon spiroïdale.

5. Garniture d'étanchéité comportant une manchette d'étanchéité selon les revendications 1 à 4, **caractérisée en ce que**, vu en coupe, le cannelage (7) est conformé à partir de triangles substantiellement symétriques ou en dents de scie asymétriques.

6. Garniture d'étanchéité comportant une manchette d'étanchéité selon les revendications 1 à 5, **caractérisée en ce que** les surfaces planes des dents de scie sont tournées vers l'espace (34) à étancher.

7. Garniture d'étanchéité comportant une manchette d'étanchéité selon les revendications 1 à 6, **caractérisée en ce que** le cannelage (7) s'étend jusqu'à la section de retenue (2) de la manchette d'étanchéité (1).

8. Garniture d'étanchéité comportant une manchette d'étanchéité selon les revendications 1 à 7, **caractérisée en ce que** la section d'étanchement (3) reposant sur l'arbre présente 4 à 12 cannelures (7), de préférence 7 à 8 cannelures (7).

9. Garniture d'étanchéité comportant une manchette d'étanchéité selon les revendications 1 à 8, **caractérisée en ce que** les cannelures (7) sont à pas multiple.
